Europäisches Patentamt

European Patent Office

Office européen des brevets

(11) Veröffentlichungsnummer: **0 466 201 A2**

# (12) EUROPÄISCHE PATENTANMELDUNG

(21) Anmeldenummer: **91113884.0**

(22) Anmeldetag: **25.07.88**

(51) Int. Cl.[5]: **A47L 1/02**, B60S 1/34

Diese Anmeldung is am 20 - 08 - 1991 als Teilanmeldung zu der unter INID-Kode 60 erwähnten Anmeldung eingereicht worden.

(30) Priorität: **28.07.87 DE 3724856**

(43) Veröffentlichungstag der Anmeldung:
**15.01.92 Patentblatt 92/03**

(60) Veröffentlichungsnummer der früheren Anmeldung nach Art. 76 EPÜ: **0 302 343**

(84) Benannte Vertragsstaaten:
**ES FR GB IT SE**

(71) Anmelder: **SWF Auto-Electric GmbH**
**Stuttgarter Strasse 119 Postfach 1763**
**W-7120 Bietigheim-Bissingen(DE)**

(72) Erfinder: **Baumgarten, Peter**
**Rothinestrasse 60**
**W-8633 Rödental-Mönchröden(DE)**
Erfinder: **Bienert, Herbert**
**Ahornweg 15**
**W-7122 Besigheim(DE)**
Erfinder: **Egner-Walter, Bruno**
**Käferflugstrasse 43**
**W-7100 Heilbronn(DE)**
Erfinder: **Prohaska, Hans**
**Nelkenweg 44**
**W-7120 Bietigheim-Bissingen(DE)**
Erfinder: **Schmid, Eckhardt**
**Heilbronner Strasse 62**
**W-7129 Brackenheim(DE)**

(54) Scheibenreinigungsanlage.

(57) Die Erfindung betrifft eine Scheibenreinigungsanlage mit einem auf einer Scheibe vorzugsweise wenigstens annähernd linear hin- und herbewegbaren, endseitig und in einer oder mehreren Betriebs-arten antreibbaren Scheibenreiniger.

Eine gute Scheibenreinigung unter Berücksichti-gung der Witterungsverhältnisse und der gesetzli-chen Vorschriften ist möglich, wenn ein Scheibenrei-niger unterschiedlich weit antreibbar ist oder wenn in einer Betriebsart einer von zwei Scheibenreinigern eine erste Strecke weit und der andere der beiden Scheibenreiniger eine zweite, in der Länge von der ersten Strecke verschiedenen Strecke weit antreib-bar ist.

Fig.1

Die Erfindung betrifft eine Scheibenreinigungsanlage mit einem auf einer Scheibe vorzugsweise wenigstens annähernd linear hin- und herbewegbaren, endseitig und in einer oder mehreren Betriebsarten antreibbaren Scheibenreiniger.

Es sind Scheibenreinigungsanlagen der verschiedensten Art bekannt. Hauptsächlich gebräuchlich sind solche, die einen oder mehrere Scheibenwischer besitzen, welche ein Wischblatt mit einer Wischleiste aus gummielastischem Werkstoff besitzen, die von einem Traggestell mit mehreren Bügeln gehalten werden, an dem im allgemeinen mittig ein in Längsrichtung über ein Ende des Wischblatts hinausreichender Wischarm angelenkt ist. Über den Wischarm kann der Scheibenwischer hin- und herpendelnd mittels einer motorisch antreibbaren Wischerwelle, die an dem wischblattfernen Ende des Wischarms angreift, derart angetrieben werden, daß er ein kreissegmentförmiges Wischfeld auf der Scheibe überstreicht (DE-PS 14 55 961). Es sind aber auch Scheibenreinigungsanlagen bekannt, die Scheibenwischer und Bürsten, Eiskratzleisten oder dergleichen aufweisen (DE-OS 34 47 055). Um ein Wisch- und/oder Reinigungsfeld zu erzielen, das bei viereckigen Scheiben bis in die Ecken reicht, ist es bekannt, sogenannte gesteuerte Wischblätter (DE-PS 21 32 496) oder Linearanlagen (DE-OS 2 659 579, US-PS 4 257 138, FR-PS 2 230 193, US-PS 3 354 494) zu verwenden, bei denen ein Scheibenreiniger im wesentlichen parallel zu sich selbst über die zu reinigende Scheibe bewegt wird.

Der Erfindung liegt die Aufgabe zugrunde, eine Scheibenreinigungsanlage mit den Merkmalen aus dem Oberbegriff des Anspruchs 1 so weiterzubilden, daß die Reinigungswirkung unter Berücksichtigung der gesetzlichen Vorschriften gut an die herrschenden Witterungsverhältnisse angepaßt werden kann.

Diese Aufgabe wird für eine Scheibenreinigungsanlage mit den Merkmalen aus dem Oberbegriff des Anspruchs 1 dadurch gelöst, daß ein Scheibenreiniger unterschiedlich weit antreibbar ist oder daß in einer Betriebsart einer von zwei Scheibenreinigern eine erste Strecke weit und der andere der beiden Scheibenreiniger eine zweite, in der Länge von der ersten Strecke verschiedenen Strecke weit antreibbar ist.

Mit einer erfindungsgemäßen Scheibenreinigungsanlage kann ein Scheibenbereich, durch den die Sicht hindurch sehr wichtig ist, leicht öfter gereinigt werden als ein anderer Scheibenbereich, dessen Reinigung weniger wichtig ist.

Vorteilhafte Ausgestaltungen einer erfindungsgemäßen Scheibenreinigungsanlage sind in den Unteransprüchen enthalten.

So kann man bei einer Scheibenreinigungsanlage nach Anspruch 2, gemäß dem ein Scheibenreiniger in einer ersten Betriebsart eine erste Strecke weit und in einer zweiten Betriebsart eine zweite, in der Länge von der ersten Strecke verschiedenen Strecke weit antreibbar ist, ohne eine Änderung der Geschwindigkeit des Scheibenreinigers je nach Witterung, z. B. je nach Stärke des Regens, die Dauer eines Wischzyklus für einen bestimmten Scheibenbereich verändern.

Eine unterschiedliche Anzahl von Wischzyklen für unterschiedliche Scheibenbereiche erhält man ohne Änderung der Betriebsart durch die Ausgestaltungen gemäß den Ansprüchen 3 oder 4.

Gemäß Anspruch 5 ist die Parkstellung für zwei Scheibenreiniger im Bereich der Scheibenmitte vorgesehen, so daß beim Einschalten der Anlage sofort die Scheibenmitte gereinigt wird.

Damit die Scheibenreiniger nicht die Sicht durch die Scheibe behindern, erscheint es jedoch günstiger, wenn jeder Scheibenreiniger gemäß Anspruch 6 oder 7 seine Parkstellung am Rande der Scheibe hat.

Unterschiedliche Strecken, über die zwei Scheibenreiniger antreibbar sind, sind besonders günstig, wenn die zwei Scheibenreiniger gemäß Anspruch 7 ihre Parkstellung im Bereich des gleichen Scheibenrandes haben. So kann der weiter innen liegende Scheibenreiniger die ganze Scheibe und der weiter außen liegende die Scheibe bis etwa zur Mitte reinigen, so daß die eine Scheibenhälfte wesentlich öfter als die andere Scheibenhälfte von einem Scheibenreiniger überfahren wird.

Ein Scheibenreiniger kann auch gemäß der Ausgestaltung nach Anspruch 8 innerhalb derselben Betriebsart mit unterschiedlichen Geschwindigkeiten antreibbar sein. Sind zwei Scheibenreiniger vorhanden, so können sie nicht nur unterschiedlich weit, sondern gemäß Anspruch 9 auch unterschiedlich schnell antreibbar sein.

Weitere vorteilhafte Einzelheiten und Ausgestaltungen der Erfindung sind aus weiteren Unteransprüchen sowie aus den nachfolgend erläuterten Zeichnungen ersichtlich, die Ausführungsbeispiele zeigen.

Dabei ist dargestellt in

Figur 1
im prinzipiellen Aufbau ein erstes Ausführungsbeispiel mit nur einem Scheibenreiniger, in

Figur 2
im prinzipiellen Aufbau eine Linearanlage mit zwei Scheibenreinigern, die jedoch nicht die erfindungsgemäße Gestaltung mit unterschiedlich langen Wegen der beiden Scheibenreiniger besitzt, und in den

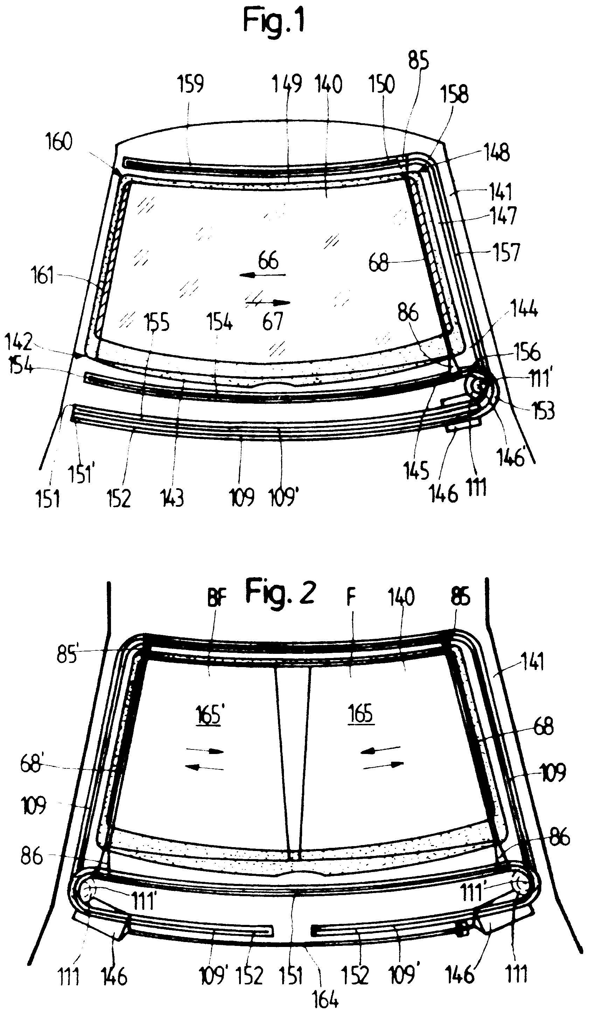

Figuren 3a bis 3e
verschiedene Bewegungsablaufarten der in Figur 1 dargestellten Anlage.

In Figur 1 ist eine Scheibenreinigungsanlage prinzipiell dargestellt, welche zum Reinigen der Windschutzscheibe 140 eines Kraftfahrzeugs 141 vorgesehen ist. Diese Scheibenreinigungsanlage ist eine Linearwischeranlage mit einem horizontal in den Pfeilrichtungen 66 und 67 über die Scheibe 140 bewegbaren Scheibenwischer 68. Die Scheibe 140 ist hier trapezförmig ausgebildet.

Als Antriebsmittel für den Scheibenwischer 68 sind zwei gleich ausgebildete, flexible, aber biegesteife Zug-/Druckelemente 109 und 109' vorgesehen. Diese könnten Stahlseile, Zahnriemen oder dergleichen sein, bestehen aber hier jeweils aus einem Seil und einer Vielzahl von im wesentlichen kugelförmigen Gliedern, die lose auf dem Seil aufgereiht sind.

Die Antriebsmittel 109 und 109' sind U-förmig verlegt, und zwar derart, daß das eine, welches mit dem Bezugzeichen 109 bezeichnet ist, unterhalb der einen unteren Scheibenecke, hier: der linken unteren Scheibenecke 142 geradeaus unterhalb des unteren Scheibenrandes 143 bis über die andere untere Scheibenecke 144 hinaus verläuft, ein in deren Bereich angeordnetes Antriebsrad 111 umschlingt, und kurz hinter diesem bei 145 endet. Hier greift das untere Ende des Scheibenwischers 68 über einen Mitnehmer 86 am Antriebsmittel 109 an. Das andere, mit dem Bezugzeichen 109' bezeichnete Antriebsmittel verläuft zunächst parallel oberhalb des Antriebsmittels 109 bis über die untere rechte Scheibenecke 144 hinaus, in deren Bereich es ein Antriebsrad 111' umschlingt, welches kleiner als das Antriebsrad 111 und mit diesem auf einer gemeinsamen Antriebswelle 146' angeordnet ist, welche die Abtriebswelle eines umpolbaren Elektromotors 146 ist. Hinter dem Antriebsrad 111' verläuft das Antriebsmittel 109' entlang des rechten, seitlichen Scheibenrandes 147, anschließend um die rechte obere Scheibenecke 148 und noch ein Stück parallel zum oberen Scheibenrand 149 und endet dann bei 150. Hier greift das obere Ende des Scheibenwischers 68 über einen Mitnehmer 85 am Antriebsmittel 109' an. Zwischen dem Scheibenwischer 68 und den Mitnehmern 85, 86 ist ein nicht dargestellter Mechanismus zum Längenausgleich des Scheibenwischers 68 während der Bewegungsabläufe vorgesehen.

Sowohl das Antriebsmittel 109 als auch das Antriebsmittel 109' sind jeweils in einem U-förmigen Führungskanal bzw. Gehäuse 151 bzw. 151' geführt. Das Gehäuse 151 für das Antriebsmittel 109, an welchem der Scheibenwischer 68 über seinen am unteren Ende angeordneten Mitnehmer 86 angreift, verläuft dabei von einer unterhalb der linken unteren Scheibenecke 142 liegenden Stelle mit einem geraden Abschnitt 152 parallel zum unteren Scheibenrand 143, dann im Bereich des Antriebsrades 111 mit einem gekrümmten Abschnitt 153 im Gegenuhrzeigersinn um dieses und anschließend mit einem geraden Abschnitt 154 oberhalb des Abschnitts 152 zur linken unteren Scheibenecke 142. Das Gehäuse 151' für das Antriebsmittel 109', an welchem der Scheibenwischer 68 über seinen am oberen Ende angeordneten Mitnehmer 85 angreift, verläuft mit einem ersten geraden Abschnitt 155 oberhalb des Abschnitts 152 des Gehäuses 151, dann im Bereich des Antriebsrades 111' mit einem gekrümmten Abschnitt 156 im Gegenuhrzeigersinn um dieses, weiter mit einem geraden Abschnitt 157 entlang des rechten, seitlichen Scheibenrandes 147, anschließend mit einem gekrümmten Abschnitt 158 im Gegenuhrzeigersinn um die rechte obere Scheibenecke 148 und schließlich mit einem geraden Abschnitt 159 parallel zum oberen Scheibenrand 149 bis in den Bereich der linken oberen Scheibenecke 160. In der Praxis sind dabei die Gehäuse 151 und 151', von unten her betrachtet, bis zum Abschnitt 154 des Gehäuses 151 von Karosserieteilen abgedeckt.

Wenn sich der Scheibenwischer 68 in der in Figur 1 dargestellten Position befindet, sind der Abschnitt 154 des Gehäuses 151 zur Führung des mit dem unteren Ende des Scheibenwischers 68 verbundenen Antriebsmittels 109 und der Abschnitt 159 des Gehäuses 151' zur Führung des mit dem oberen Ende des Scheibenwischers 68 verbundenen Antriebsmittels 109' leer. Wenn sich die Antriebswelle 146' und damit jedes Antriebsrad 111 und 111' im Gegenuhrzeigersinn dreht, werden die Antriebsmittel 109 und 109' und damit der Scheibenwischer 68 in Pfeilrichtung 66 nach links bewegt. Der am unteren Ende des Scheibenwischers 68 befindliche Mitnehmer 86 wird dabei schneller bewegt als der am oberen Ende des Scheibenwischers 68 befindliche Mitnehmer 85, da das Antriebsmittel 109 für den Mitnehmer 86 mit dem größeren Antriebsrad 111 zusammenwirkt. Das Größenverhältnis der Antriebsräder 111 und 111' ist dabei derart auf die Trapezform der Scheibe 140 abgestimmt, daß der Mitnehmer 86 fast die linke untere Scheibenecke 142 erreicht hat, wenn der Mitnehmer 85 fast die linke obere Scheibenecke 152 erreicht hat. Demgemäß wird auf der Scheibe 140 ein trapezförmiges Wischfeld erzielt, das fast vom rechten seitlichen Scheibenrand 147 bis zum linken seitlichen Scheibenrand 161, und, da der Scheibenwischer 68 einen relativ langen Wischgummi besitzt, fast vom oberen Scheibenrand 149 bis nahe zum unteren Scheibenrand 143 reicht. Dann sind der Abschnitt 152 des Gehäuses 151 und der Abschnitt 154 des Gehäuses 151' leer.

Wenn der Scheibenwischer 68 auf die zuvor beschriebene Weise fast den linken seitlichen Scheibenrand 161 erreicht hat, wird der Motor 146 umgepolt, so daß sich die Antriebswelle 146' und damit jedes Antriebsrad 111 und 111' im Uhrzeigersinn dreht, und es werden die Antriebsmittel 109 und 109' und damit der Scheibenwischer 68 in Pfeilrichtung 67 nach rechts bewegt.

Ein besonderer Vorteil dieser Scheibenreinigungsanlage ist, daß aufgrund der zuvor beschriebenen Anordnung des Motors 146 unterhalb der Scheibenecke 144, aber im Bereich der Längenausdehnung der Scheibe 140 bzw. der Breitenausdehnung des Fahrzeugs 141, die Antriebsmittel 109 und 109' überall, wie zuvor beschrieben, nahe der zu reinigenden Scheibe 140 verlaufen können und weder seitlich noch ober- oder unterhalb der Scheibe 140 außerhalb der üblichen Fahrzeugmaße bzw. in einen ungünstigen Fahrzeugraum hin, z.B. in den Motorraum hin, Ausweichraum benötigen. Der gleiche Effekt wäre natürlich erzielbar, wenn der Motor 146 bzw. ein anderer Motor im Bereich einer anderen als der dargestellten Scheibenecke, z.B. unterhalb der Scheibenecke 142 oder oberhalb der Scheibenecke 148 und im Bereich der Längenausdehnung der Scheibe 140 angeordnet wird. (Die Antriebsmittel 109 und 109' sowie Gehäuse 151 und 151' müßten dann spiegelbildlich zu Figur 1 angeordnet werden.) Die letztgenannte Variante wäre für Fahrzeuge mit großem Überbau über der Scheibe geeignet, z.B. für Lastkraftwagen. Die Scheibenreinigungsanlage beruht somit auf dem Grundgedanken, den Antrieb (Antriebsrad bzw. -räder und Motor) in einem Umkehrbereich des Scheibenwischers, aber ober- bzw. unterhalb versetzt zu und innerhalb der Längenausdehnung seiner Bewegungsbahn anzuordnen und dadurch eine günstige Antriebsmittelverlegung erzielen zu können.

Die Figur 2 dient nur dazu, einen möglichen prinzipiellen Aufbau einer Linearanlage mit zwei Scheibenreinigern zu zeigen. Es ist jedoch keines der Merkmale aus dem kennzeichnenden Teil des Anspruchs 1 verwirklicht.

Auch diese weitere Scheibenreinigungsanlage ist zum Reinigen einer trapezförmigen Scheibe ausgebildet. Die Scheibe ist hier wieder - wie bei der anhand von Figur 1 beschriebenen Anlage - die Windschutzscheibe 140 eines Kraftfahrzeuges 141.

Im Unterschied zu der anhand von Figur 1 beschriebenen Anlage besitzt die Anlage zwei Scheibenwischer 68 und 68', deren Parkstellung im Bereich des rechten seitlichen Scheibenrandes 147 bzw. des linken seitlichen Scheibenrandes 161 vorgesehen ist. Diese sind wiederum beidendig über jeweils einen Mitnehmer 85 bzw. 85' und 86 bzw. 86' mit zwei gleich ausgebildeten, flexiblen, aber biegesteifen Zug-Druckelementen 109 und 109'als Antriebsmittel verbunden, die gleichartig wie die anhand der Figur 1 beschriebenen verlegt und antreibbar sind. Sie sind lediglich spiegelbildlich zueinander angeordnet und der Abschnitt 152 des Gehäuses 151 ist kürzer als bei Figur 1 ausgebildet.

Die einzelnen Bauteile der Scheibenreinigungsanlage, die gleich wie bei der in Figur 1 dargestellten ausgebildet sind, sind in Figur 2 mit den gleichen Bezugszeichen wie in Figur 1 versehen. Bezüglich ihrer Beschreibung wird auf die der Figur 1 verwiesen.

Die Elektromotoren 146 sind über eine zuschaltbare Synchronwelle 164 miteinander verbunden. Die Scheibenreinigungsanlage ist derart elektrisch geschaltet, daß der Scheibenwischer 68 ein trapezförmiges Feld 165 auf der Fahrerseite F und der Scheibenwischer 68' ein trapezförmiges Feld 165' auf der Beifahrerseite BF des Kraftfahrzeugs 141 reinigen kann.

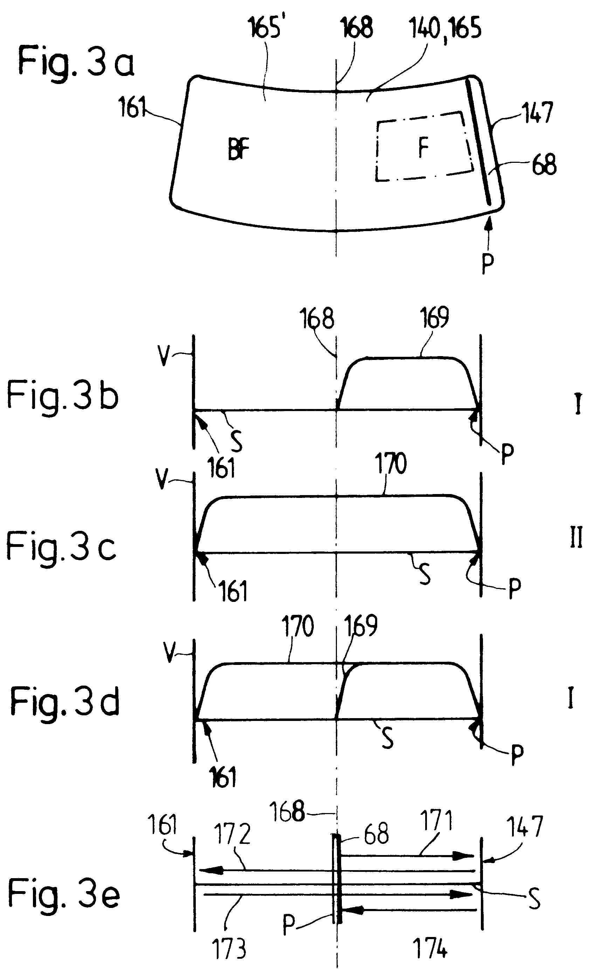

In den Figuren 3a bis 3e ist dargestellt, wie die in Figur 1 dargestellte Scheibenreinigungsanlage speziell betrieben werden kann. Dabei ist in Figur 3a die Anlage vereinfacht dargestellt. Darunter sind drei Diagramme und eine Skizze gezeigt. Auf den Senkrechten der drei Diagramme 3b - 3d ist dabei die Geschwindigkeit v und auf den Waagerechten der Weg s des Scheibenwischers 68 angegeben. Mit der Linie 168 ist die Mitte der Scheibe 140 gekennzeichnet. Die beiden Diagramme nach den Figuren 3b und 3c zeigen einen ersten, besonderen Linearantrieb. Hier ist vorgesehen, daß der Scheibenwischer 68 in der Betriebsstufe 1 von der im Bereich des seitlichen Scheibenrandes 147 liegenden Parkstellung P aus mit konstanter Geschwindigkeit v die Scheibe 140 (Figur 3a) bis zur Mittellinie 168 und wieder bis zum Scheibenrand 147 zurück, das heißt also, das SAE-Wischfeld 165 auf der Fahrerseite F, wischt. Dies ist in Figur 3b mit der Kurve 169 angedeutet. Dadurch wird eine schnelle Reinigung dieses wichtigen Scheibenbereiches 165 ermöglicht.

In der zweiten Betriebsstufe 11 ist vorgesehen, daß der Scheibenwischer 68 von der im Bereich des seitlichen Scheibenrandes 147 liegenden Parkstellung P aus mit konstanter Geschwindigkeit v die Scheibe 140 (Figur 3a) bis zum anderen seitlichen Scheibenrand 161 und wieder bis zum Scheibenrand 147 zurück, das heißt also sowohl das Wischfeld 165 auf der Fahrerseite F als auch das Wischfeld 165' auf der Beifahrerseite BF wischt. Dies ist in Figur 3c mit der Kurve 170 angedeutet.

Bei der in Figur 3d dargestellten Variante ist wiederum anhand eines Diagramms ein zweiter, besonderer Linearantrieb gezeigt. Hier ist vorgesehen, daß der Scheibenwischer 68 in der Betriebsstufe 1 im Wechsel einmal von der im Bereich des einen Scheibenrandes 147 liegenden Parkstellung P aus mit konstanter Geschwindigkeit v die Scheibe 140 (Figur 3a) bis zur Mittellinie 168 und wieder bis zum Scheibenrand 147 zurück (Kurve 169) und anschließend von der im Bereich des Scheibenrandes 147 liegenden Parkstellung P aus mit konstanter Geschwindigkeit v die Scheibe 140 bis zum anderen Scheibenrand 161 und wieder bis zum Scheibenrand 147 zurück reinigt. Dadurch wird in nur einer Betriebsstufe eine schnelle Reinigung des wichtigen Scheibenbereiches 165 im Wechsel mit dem Scheibenbereich 165' ermöglicht. Dabei wird das Wischfeld 165 auf der Fahrerseite F doppelt so oft gereinigt wie das Wischfeld 165' auf der Beifahrerseite BF.

Bei der Ausführung nach den Figuren 3b und 3c ist der Scheibenwischer 68 in der ersten Betriebsart 1 eine erste Strecke weit und in der zweiten Betriebsart 11 eine zweite Strecke weit antreibbar, deren Länge von der Länge der ersten Strecke verschieden ist. Demgegenüber ist der Scheibenreiniger bei der Ausführung nach Figur 3d in einer bestimmten Betriebsart in ständigem Wechsel über zwei unterschiedlich lange Strecken antreibbar.

In der mit Figur 3c bezeichneten Skizze ist ein dritter, besonderer Linearantrieb gezeigt. Hier ist die Parkstellung P des Scheibenwischers 68 im Bereich der Mittellinie 168 der Scheibe 140 (Figur 3a) vorgesehen. Von dort aus wird er zunächst bis zum seitlichen Scheibenrand 147 auf der Fahrerseite F (Pfeil 171), dann zum seitlichen Scheibenrand 161 auf der Beifahrerseite 161 (Pfeil 172), danach zum Scheibenrand 147 (Pfeil 173) und von dort zurück zur Scheibenmitte 168 (Pfeil 174) angetrieben. Das Wischfeld 165 auf der Fahrerseite F wird also auch hier wie bei Figur 3d doppelt so oft gereinigt wie das Wischfeld 165' auf der Beifahrerseite BF.

Eine solche Wischeranlage könnte mit Vorteil bei Bussen oder Lastkraftwagen eingesetzt werden, die im Seitenbereich stark gekrümmte Scheiben besitzen, so daß bei einer Parkstellung der Scheibenwischer im Bereich eines seitlichen Scheibenrandes große Antriebskräfte aufgebracht werden müßten, um diese aus der Parkstellung bewegen zu können, was bei der vorgeschlagenen Parkstellung der Scheibenwischer im Bereich der Scheibenmitte nicht der Fall ist.

**Patentansprüche**

1. Scheibenreinigungsanlage mit wenigstens einem auf einer Scheibe (140) vorzugsweise wenigstens annähernd linear hin- und herbewegbaren, endseitig und in einer oder mehreren Betriebsarten antreibbaren Scheibenreiniger (68), dadurch gekennzeichnet, daß ein Scheibenreiniger (68) unterschiedlich weit antreibbar ist oder daß in einer Betriebsart einer von zwei Scheibenreinigern eine erste Strecke weit und der andere der beiden Scheibenreiniger eine zweite, in der Länge von der ersten Strecke verschiedenen Strecke weit antreibbar ist.

2. Scheibenreinigungsanlage nach Anspruch 1, dadurch gekennzeichnet, daß ein Scheibenreiniger (68) in einer ersten Betriebsart (I, II) eine erste Strecke (169, 170) weit und in einer zweiten Betriebsart (II, I) eine zweite, in der Länge von der ersten Strecke (169, 170) verschiedenen Strecke (170, 169) weit antreibbar ist.

3. Scheibenreinigungsanlage nach Anspruch 1 oder 2, dadurch gekennzeichnet, daß ein Scheibenreiniger (68) in einer Betriebsart wechselnd unterschiedlich lange Strecken (169, 170) antreibbar ist.

4. Scheibenreinigungsanlage nach Anspruch 3, dadurch gekennzeichnet, daß der Scheibenreiniger (68) über zwei unterschiedlich lange Strecken (169, 170) antreibbar ist und daß er nach jedem Antrieb über irgendeine der beiden Strecken (169, 170) wieder über die andere Strecke (170, 169) antreibbar ist.

5. Scheibenreinigungsanlage nach einem der vorhergehenden Ansprüche, dadurch gekennzeichnet, daß die Parkstellung für zwei Scheibenreiniger (68, 68') im Bereich der Scheibenmitte (168) vorgesehen ist.

6. Scheibenreinigungsanlage nach einem der Ansprüche 1 bis 4, dadurch gekennzeichnet, daß zwei Scheibenreiniger (68, 68') ihre Parkstellungen im Bereich gegenüberliegender Scheibenränder (147) besitzen.

7. Scheibenreinigungsanlage nach einem der Ansprüche 1 bis 4, dadurch gekennzeichnet, daß zwei Scheibenreiniger ihre Parkstellung im Bereich des gleichen Scheibenrandes besitzen.

8. Scheibenreinigungsanlage nach einem vorhergehenden Anspruch, dadurch gekennzeichnet, daß ein Scheibenreiniger innerhalb derselben Betriebsart mit unterschiedlichen Geschwindigkeiten antreibbar ist.

9. Scheibenreinigungsanlage nach einem vorhergehenden Anspruch, dadurch gekennzeichnet, daß zugleich einer von zwei Scheibenreinigern mit einer ersten und der andere von zwei Scheibenreinigern mit einer zweiten von der ersten verschiedenen Geschwindigkeit antreibbar ist.

10. Scheibenreinigungsanlage nach einem vorhergehenden Anspruch, dadurch gekennzeichnet, daß jeder Scheibenreiniger (68, 68') von einem in seiner Drehrichtung umkehrbaren Elektromotor (146) antreibbar ist.

# Fig.1

# Fig. 2

Fig. 3 a

Fig. 3 b

Fig. 3 c

Fig. 3 d

Fig. 3 e